# EUROPÄISCHE PATENTSCHRIFT

(11) **EP 1 819 921 B1**
(45) Veröffentlichungstag und Bekanntmachung des Hinweises auf die Patenterteilung: **23.04.2008**
(21) Anmeldenummer: 05815849.4
(22) Anmeldetag: 28.11.2005
(51) Int. Cl.: F02F 3/00, F02F 3/22, F16J 1/00

(54) **KOLBEN FÜR EINEN VERBRENNUNGSMOTOR**
PISTON FOR A COMBUSTION ENGINE
PISTON D'UN MOTEUR A COMBUSTION INTERNE

(30) Priorität: 30.11.2004 DE 102004057559
(43) Veröffentlichungstag der Anmeldung: 22.08.2007
(73) Patentinhaber: Mahle International GmbH, 70376 Stuttgart (DE)
(72) Erfinder: SCHARP, Rainer, 71665 Vaihingen (DE)
(74) Vertreter: Pohle, Reinhard
(86) Internationale Anmeldenummer: PCT/DE2005/002140
(87) Internationale Veröffentlichungsnummer: WO 2006/058521

(56) Entgegenhaltungen:
- DE-A1- 3 719 469

## Beschreibung

Die Erfindung betrifft einen Kolben für einen Verbrennungsmotor nach dem Oberbegriff des Anspruches 1.

Aus der Patentschrift DD 123 962 ist ein Kolben für einen Verbrennungsmotor bekannt, der aus einem Kolbengrundkörper und einer im Bereich des Kolbenbodens auf den Kolbengrundkörper aufgeschraubten, ringförmigen Nutbewehrung besteht. Die Nutbewehrung verschließt hierbei eine in den Kolbengrundkörper eingeformte Ausnehmung und schafft damit einen ringförmigen, geschlossenen Kühlkanal. Seitens des Kolbengrundkörpers befindet sich das Gewinde, auf das die Nutbewehrung aufgeschraubt wird, auf der radialen Außenseite eines nahe dem Kolbenboden an die Außenseite des Kolbens angeformten Kragens, der aber eine derart kurz bemessene radiale Abmessung hat, dass er keinerlei elastische Nachgiebigkeit aufweist. Dies bringt den Nachteil mit sich, dass auf die Schraubverbindung keine diese Verbindung festigende Vorspannung ausgeübt werden kann.

Diesen Nachteil des Standes der Technik zu vermeiden, ist Aufgabe der Erfindung..

Gelöst wird die Aufgabe mit den im Kennzeichen des Hauptanspruches stehenden Merkmalen. Zweckmäßige Ausgestaltungen der Erfindung sind Gegenstand der Unteransprüche.

Ein Ausführungsbeispiel der Erfindung wird im Folgenden anhand der Zeichnungen beschrieben. Es zeigen
- Fig. 1: einen Schnitt durch den Kolben gemäß der Erfindung entlang der Bolzenlängsachse,
- Fig. 2: eine vergrößerte Darstellung des Bereiches A aus Fig. 1, in der eine Nutbewehrung gemäß der Erfindung in Detail gezeigt ist, und
- Fig. 3: einen Schnitt durch den Kolben entlang einer senkrecht zur Bolzenlängsachse liegenden Linie.

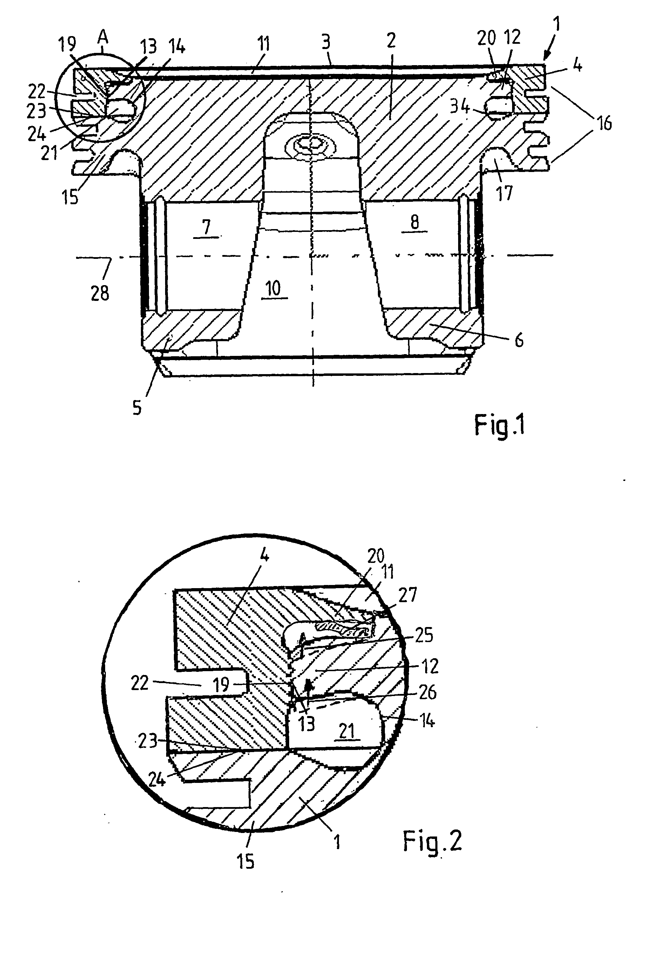

Fig. 1 zeigt im Schnitt einen Kolben 1 bestehend aus einem Kolbengrundkörper 2 und einer im Bereich des Kobenbodens 3 auf den Kolbengrundkörper 2 aufgeschraubten, ringförmigen Nutbewehrung 4.

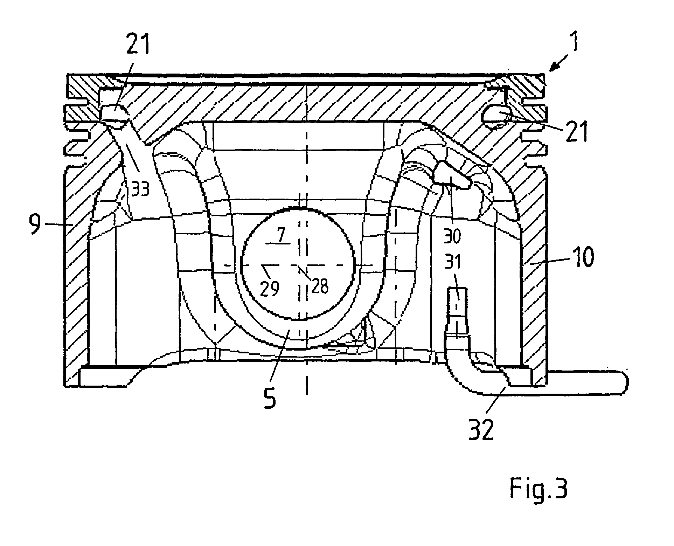

Der Kolbengrundkörper 2 weist auf der dem Kolbenboden 3 abgewandten Unterseite zwei Bolzennaben 5 und 6 auf, in der sich je eine Bolzenbohrung 7 und 8 zur Aufnahme eines in den Figuren nicht dargestellten Kolbenbolzens befindet. Die Bolzennaben 5, 6 sind, wie insbesondere in Fig. 3 dargestellt ist, beidseitig mit Schaftelementen 9, 10 verbunden, von denen in Fig. 1 das Schaftelement 10 in Draufsicht dargestellt ist.

Der Kolbenboden 3 weist eine flach ausgebildete Verbrennungsmulde 11 auf. Im kolbenbodenseitigen Bereich ist an die radiale Außenseite des Kolbens 1 ein nach radial außen weisender, im Querschnitt zumindest näherungsweise rechteckförmiger, umlaufender Kragen 12 angeformt, der radial außen ein umlaufendes Gewinde 13 trägt, und an den sich nabenseitig eine umlaufende Ausnehmung 14 anschließt. Nabenseitig schließt sich an die Ausnehmung 14 ein nach radial außen weisender, umlaufender Vorsprung 15 an, in den kolbenbodenseitig ein Teil der Ausnehmung 14 eingeformt ist, der radial außen den unteren Teil der Ringpartie 16 trägt, und der nabenseitig einen in Richtung der Bolzennaben 5, 6 offenen Kühlkanal 17 aufweist.

Auf das Gewinde 13 des Kragens 12 ist, wie auch in Fig. 2 dargestellt ist, die ringförmige Nutbewehrung 4 über ein in der Nutbewehrung 4 radial innen liegendes Gewinde 19 aufgeschraubt. Die Nutbewehrung 4 weist kolbenbodenseitig einen nach radial innen weisenden, im Querschnitt nasenförmigen, umlaufenden Vorsprung 20 auf, dessen Unterseite beim Aufschrauben der Nutbewehrung 4 auf den Kolben 1 entweder direkt oder, wie weiter unten näher erläutert wird, über ein Dichtelement 27 auf die Oberseite des Kragens 12 zu liegen kommt. Hierbei wird die radial äußere Begrenzung der Verbrennungsmulde 11 vom in axialer Richtung über den Kolbenboden 3 hinausragenden, oberen Teil des Vorsprunges 20 gebildet.

Weiterhin verschließt die auf den Kolben 1 aufgeschraubte Nutbewehrung 4 die Ausnehmung 14 und bildet dadurch einen geschlossenen Kühlkanal 21, der über weiter unten näher erläuterte Zu- und Ablauföffnungen 30, 33 mit dem Innenbereich des Kolbens 1 verbunden ist.

Radial außen ist in die Nutbewehrung 4 eine Verdichtungsringnut 22 eingeformt. Nabenseitig weist die Nutbewehrung 4 eine ebene, ringförmige Auflagefläche 23 auf, die beim Aufschrauben der Nutbewehrung 4 auf den Kolben 1 auf einer ebenso geformten, kolbenbodenseitig auf dem Vorsprung 15 angeordneten, ringförmigen Auflagefläche 24 zur Anlage gelangt.

Der Kolbengrundkörper 2 besteht aus einer Aluminium-Silizium-Legierung mit einem maximalen Siliziumgehalt von 15%, wobei der Kolbengrundkörper 2 unter Anwendung eines Schmiede- oder eines Gießverfahrens hergestellt wird. Die Nutbewehrung 4 besteht aus einer Aluminiumlegierung, die zur Erhöhung deren Verschleißfestigkeit 15% bis 26% Silizium und zur Verbesserung deren Beständigkeit gegen Deformationen im Motorbetrieb 2,5% bis 7% Kupfer enthält. Eine weitere Erhöhung der Verschleißfestigkeit der Nutbewehrung 4 ist erreichbar, wenn der Legierung Silizium-Karbid-Partikel beigemischt werden. Hergestellt wird die Nutbewehrung 4 unter Anwendung eines Gießverfahrens, wonach die Nutbewehrung 4 zur Verringerung deren Porosität und damit zur Optimierung deren mechanischen Eigenschaften auf dem Wege des heißisostatischen Pressens (HIP) nachverdichtet wird.

Fig. 2 zeigt eine vergrößerte Darstellung des in Fig. 1 markierten Bereiches A, die den Montagzustand zeigt, bei dem die Nutbewehrung 4 auf dem Kolben festgeschraubt ist. Die Form des Kragens 12 im entspannten Zustand, d.h., wenn die Nutbewehrung 4 auf dem Kragen 12 noch nicht festgeschraubt ist, ist in Fig. 2 gestrichelt eingezeichnet. Erkennbar ist, dass der Kragen 12 hierbei radial außen eine Biegung in Nabenrichtung aufweist. Wird die Nutbewehrung 4 auf dem Kragen 12 festgeschraubt, wird der Kragen 12, wie mittels der Pfeile 25 und 26 angedeutet ist, in Richtung des Kolbenbodens 3 zurückgebogen und vorgespannt, sodass vom Kragen 12 auf die Schraubverbindung zwischen Kragen 12 und Nutbewehrung 4 eine Vorspannung ausgeübt wird, die eine ausreichende Festigkeit dieser Schraubverbindung gewährleistet.

Zwischen dem radial innen liegenden Vorsprung 20 der Nutbewehrung 4 und dem Kragen 12 ist ein ringförmiges Dichtelement 27 aus Federstahl angeordnet, das den Kühlkanal 21 vor den auf den Kolbenboden 1 einwirkenden Verbrennungsgasen abdichtet, und das die Form eines Tellerrandes aufweist. In Fig. 2, die den Montageendzustand des Kolbens 1 zeigt, ist das Dichtelement 27 im vorgespannten Zustand gezeigt. Im entspannten Zustand weist es im Querschnitt betrachtet eine größere Welligkeit auf, wird aber beim Festschrauben der Nutbewehrung 4 auf dem Kragen 12 bis zu der in Fig. 2 dargestellten Form zusammengepresst und abgeflacht.

In Fig. 3 ist ein Schnitt durch den Kolben 1 entlang einer senkrecht zur Bolzenlängsachse 28 liegenden Linie 29 dargestellt. Zu erkennen ist eine Ölzulauföffnung 30, über die von einer Einspritzdüse 31 abgespritztes Öl in den geschlossenen Kühlkanal 21 eingeleitet wird. Die Einspritzdüse 31 ist an einer Ölzulaufleitung 32 befestigt, die stationär im Zylinderblock angeordnet ist und immer nur dann, wenn der Kolben 1 im Motorbetrieb den unteren Umkehrpunkt erreicht, die in Fig. 3 gezeigte Position gegenüber dem Kolben 1 einnimmt. Nur dann kann auch Öl über die Ölzulauföffnung 30 in den Kühlkanal 21 eingeleitet werden. Weiterhin ist in Fig. 3 eine Ölablauföffnung 33 dargestellt, über die das Öl nach Kühlung des Kolbens 1 den Kühlkanal 21 wieder verlässt.

### Bezugszeichenliste

- A: Bereich
- 1: Kolben
- 2: Kolbengrundkörper
- 3: Kolbenboden
- 4: Nutbewehrung
- 5, 6: Bolzennabe
- 7,8: Bolzenbohrung
- 9, 10: Schaftelement
- 11: Verbrennungsmulde
- 12: Kragen
- 13: Gewinde, Außengewinde
- 14: Ausnehmung
- 15: Vorsprung
- 16: Ringpartie
- 17: offener Kühlkanal
- 19: Gewinde, Innengewinde
- 20: Vorsprung
- 21: geschlossener Kühlkanal
- 22: Verdichtungsringnut
- 23, 24: Auflagefläche
- 25, 26: Pfeil
- 27: Dichtelement
- 28: Bolzenlängsachse
- 29: Linie
- 30: Ölzulauföffnung
- 31: Einspritzdüse
- 32: Ölzulaufleitung
- 33: Ölablauföffnung
- 34: Bereich

## Patentansprüche

1. Kolben (1) für einen Verbrennungsmotor
- bestehend aus einem Kolbengrundkörper (2)
= mit einem Kolbenboden (3),
= mit auf der dem Kolbenboden (3) abgewandten Seite des Kolbens (1) angeordneten Bolzennaben (5, 6),
= mit in die Bolzennaben (5, 6) eingeformten Bolzenbohrungen (7, 8),
= mit die Bolzennaben (5, 6) miteinander verbindenden Schaftelementen (9, 10) und
= mit einem vom Kolbenboden (3) ausgehenden, radial außen angeordneten, axial in Nabenrichtung weisenden, radial zurückgesetzten, umlaufenden Bereich (34), aufweisend
□ einen in geringem axialem Abstand vom Kolbenboden (3) angeordneten, an die radiale Außenseite des Kolbens (1) angeformten, nach radial außen weisenden, im Querschnitt zumindest näherungsweise rechteckförmigen, umlaufenden Kragen (12), der radial außen ein umlaufendes Außengewinde (13) aufweist, dessen Durchmesser kleiner ist als der Kolbendurchmesser, und weiterhin aufweisend
□ eine nabenseitig sich daran anschließende, úmlaufende Ausnehmung (14), und
- bestehend weiterhin aus einer ringförmigen Nutbewehrung (4) mit einem sich an deren Stirnseite anschließenden, nach radial innen weisenden, umlaufenden Vorsprung (20), an den sich nabenseitig ein Innengewinde (19) anschließt, über das die Nutbewehrung (4) auf das Außengewinde (13) aufgeschraubt ist, wobei eine nabenseitige Auflagefläche (23) der Nutbewehrung (4) auf einer den Bereich (34) nabenseitig begrenzenden Auflagefläche (24) aufliegt und damit die Ausnehmung (14) zur Bildung eines ringförmigen, geschlossenen Kühlkanals (21) verschließt, und wobei die Ringpartie (16) des Kolbens (1) teils auf der radialen Außenseite der Nutbewehrung (4) und teils auf der nabenseitig sich daran anschließenden, radialen Außenseite des Kolbens (1) angeordnet ist,
**dadurch gekennzeichnet, dass** der Kragen (12) radial außen eine Biegung in Nabenrichtung und eine für eine elastische Nachgiebigkeit in axialer Richtung ausreichende radiale Breite aufweist.

2. Kolben (1) für einen Verbrennungsmotor nach Anspruch 1, **dadurch gekennzeichnet, dass** die Nutbewehrung (4) in axialer Richtung über den Kolbenboden (3) hinausragt und damit die radial äußere Begrenzung einer Verbrennungsmulde (11) bildet.

3. Kolben (1) für einen Verbrennungsmotor nach Anspruch 1 oder 2, **dadurch gekennzeichnet, dass** zwischen dem Vorsprung (20) der Nutbewehrung (4) und dem Kragen (12) ein ringförmiges, elastisch nachgiebiges Dichtelement (27) aus Federstahl angeordnet ist, das die Form eines Tellerrandes aufweist.

4. Kolben (1) für einen Verbrennungsmotor nach einem der vorhergehenden Ansprüche, **dadurch gekennzeichnet, dass** der Kolbengrundkörper (2) aus einer Aluminium-Silizium-Legierung mit einem maximalen Siliziumgehalt von 15% besteht.

5. Kolben (1) für einen Verbrennungsmotor nach einem der vorgehenden Ansprüche, **dadurch gekennzeichnet, dass** die Nutbewehrung (4) aus einer Aluminiumlegierung mit 15% bis 26% Silizium und 2,5% bis 7% Kupfer besteht.

6. Kolben (1) für einen Verbrennungsmotor nach Anspruch 5, **dadurch gekennzeichnet, dass** der Aluminiumlegierung Silizium-Karbid-Partikel beigemischt sind.

## Claims

1. A piston (1) for an internal combustion engine,
- consisting of a basic piston structure (2)
= with a piston crown (3),
= with bolt hubs (5, 6) arranged on the side of the piston (1) facing away from the piston crown (3),
= with bolt bores (7, 8) formed in the bolt hubs (5, 6),
= with shaft elements (9, 10) connecting the bolt hubs (5, 6) together and
= with a radially set back rotating section (34) starting from the piston crown (3), arranged radially outwards and pointing axially in the direction of the hub, comprising
□ a rotating collar (12), which is arranged a small axial distance from the piston crown (3) and is formed on the radial exterior of the piston (1), is directed radially outwards and is at least approximately rectangular in cross section, which collar (12) has a circumferential external thread (13) running radially outwards, the diameter of which is smaller than the piston diameter, and also comprising
□ a rotating recess (14) adjoining the latter on the hub side and
- also consisting of an annular groove reinforcement (4) with a rotating projection (20) which adjoins the face side of the latter and is directed radially inwards, onto which projection an internal thread (19) is attached on the hub side, by means of which the groove reinforcement (4) is screwed onto the external thread (13), whereby a hub-side bearing surface (23) of the groove reinforcement (4) bears on a bearing surface (24) delimiting the section (34) on the hub side and thereby closes the recess (14) to form an annular closed cooling channel (21), and whereby the ring part (16) of the piston (1) is arranged partly on the radial exterior of the groove reinforcement (4) and partly on the hub-side adjoining radial exterior of the piston (1), **characterised in that** radially outwards the collar (12) comprises a bend in hub direction and has a radial width which is sufficient for elastic flexibility in axial direction.

2. The piston (1) for an internal combustion engine according to claim 1,
**characterised in that** the groove reinforcement (4) projects in axial direction beyond the piston crown (3) and thus forms the radially outer delimitation of a combustion bowl (11).

3. The piston (1) for an internal combustion engine according to claim 1 or 2, **characterised in that** between the projection (20) of the groove reinforcement (4) and the collar (12) an annular, elastically flexible sealing element (27) made of spring steel is arranged, which has the shape of a ring edge.

4. The piston (1) for an internal combustion engine according to one of the preceding claims, **characterised in that** the basic piston structure (2) is made from an aluminium silicon alloy with a maximum silicon content of 15%.

5. The piston (1) for an internal combustion engine according to one of the preceding claims, **characterised in that** the groove reinforcement (4) is made from an aluminium alloy containing 15% to 26% silicon and 2.5% to 7% copper.

6. The piston (1) for an internal combustion engine according to claim 5, **characterised in that** silicon carbide particles are added to the aluminium alloy.

## Revendications

1. Piston (1) pour un moteur à combustion interne
- se composant d'un corps de base de piston (2)
-- avec un fond de piston (3),
-- avec des bossages de tourillon (5, 6) disposés sur le côté du piston (1) opposé au fond de piston (3),
-- avec des alésages de boulon (7, 8) formés dans les bossages de tourillon (5, 6),
-- avec des éléments de tige (9, 10) reliant entre eux les bossages de tourillon (5, 6) et
-- avec une zone (34) entourante, reculée radialement, dirigée axialement dans le sens des bossages, disposée radialement à l'extérieur, partant du fond de piston (3), présentant
--- un collet (12) entourant, au moins approximativement rectangulaire en section, dirigé radialement vers l'extérieur, formé sur le côté extérieur radial du piston (1), disposé à faible distance axiale de la tête de piston (3), lequel collet (12) présente radialement à l'extérieur un filetage extérieur (13) entourant, dont le diamètre est inférieur au diamètre de piston, et présentant en outre
--- un évidement (14) entourant, s'y raccordant côté bossage, et
- se composant en outre d'une armature rainurée (4) annulaire avec une saillie (20) entourante, dirigée radialement vers l'intérieur, se raccordant au côté avant, à laquelle se raccorde côté bossage un filetage intérieur (19), par le biais duquel l'armature rainurée (4) est vissée sur le filetage extérieur (13), une surface d'appui (23) côté bossage de l'armature rainurée (4) reposant sur une surface d'appui (24) limitant la zone (34) côté bossage et ainsi fermant l'évidement (14) pour former un canal de refroidissement (21) fermé, annulaire, et la partie annulaire (16) du piston (1) étant disposée en partie sur le côté extérieur radial de l'armature rainurée (4) et en partie sur le côté extérieur radial, s'y raccordant côté bossage du piston (1),
**caractérisé en ce que** le collet (12) présente radialement à l'extérieur un cintrage dans le sens de bossage et une largeur radiale suffisante pour une flexibilité élastique dans le sens axial.

2. Piston (1) pour un moteur à combustion interne selon la revendication 1, **caractérisé en ce que** l'armature rainurée (4) dépasse dans le sens axial du fond de piston (3) et forme ainsi la délimitation radiale extérieure d'une cavité de combustion (11).

3. Piston (1) pour un moteur à combustion interne selon la revendication 1 ou 2, **caractérisé en ce qu'**entre la saillie (20) de l'armature rainurée (4) et le collet (12) est disposé un élément d'étanchéité (27) annulaire, flexible élastiquement en acier à ressorts qui présente la forme d'un bord d'assiette.

4. Piston (1) pour un moteur à combustion interne selon l'une quelconque des revendications précédentes, **caractérisé en ce que** le corps de base de piston (2) est composé d'un alliage d'aluminium-silicium avec une teneur en silicium maximale de 15 %.

5. Piston (1) pour un moteur à combustion interne selon l'une quelconque des revendications précédentes, **caractérisé en ce que** l'armature rainurée (4) est composée d'un alliage d'aluminium comprenant 15 à 26 % de silicium et 2,5 à 7 % de cuivre.

6. Piston (1) pour un moteur à combustion interne selon la revendication 5, **caractérisé en ce que** des particules de carbure de silicium sont ajoutées à l'alliage d'aluminium.
